# DEMANDE DE BREVET EUROPEEN

(11) **EP 1 022 671 A1**
(43) Date de publication de la demande: **26.07.2000**
(21) Numéro de dépôt: 99200200.6
(22) Date de dépôt: 22.01.1999
(51) Int. Cl.: G06F 17/60

(54) **Procédé et dispositif de contrôle de la manutention d'un produit déterminé et de la qualité de ce produit**

(71) Demandeur: Goeman, Luc, 1860 Meise (BE)
(72) Inventeur: Goeman, Luc, 1860 Meise (BE)
(74) Mandataire: Callewaert, Jean

(57) **Abrégé**

Procédé et dispositif de contrôle de la manutention d'un produit déterminé, de la qualité de ce produit et/ou des conditions de travail d'une installation mettant en oeuvre ce produit comprenant des moyens d'identification et/ou de contrôle de qualité (14) et des moyens (10) pour la détection des données contenues dans les moyens d'identification et/ou de contrôle (14), ces derniers coopérant avec des organes (5, 6, 8)permettant la distribution ou l'utilisation desdits produits lorsque ces données sont en concordance avec des données stockées dans les moyens de détection (14), dans le cas contraire, ces organes étant bloqués.

## Description

La présente invention est relative à un procédé de contrôle de la manutention, tel que la distribution et l'utilisation, d'un produit déterminé, de la qualité de ce produit et/ou des conditions de travail d'une installation mettant en oeuvre ce produit.

Un des buts principaux de l'invention est de rentabiliser un investissement réalisé par un fabricant ou un fournisseur pour la vente d'un produit déterminé chez un utilisateur ou distributeur du produit déterminé. Il s'agit plus particulièrement d'assurer le retour sur l'investissement correct correspondant au contrat passé entre le fournisseur d'un produit déterminé et un tiers, chez qui ou pour qui l'investissement a été fait pour l'utilisation, la distribution ou la vente de ce produit.

Ainsi, ce procédé peut trouver son application dans des domaines extrêmement variés, tels que la distribution, dans des débits de boissons, de boissons conditionnées dans des conteneurs, l'utilisation d'un produit déterminé pour le traitement d'un objet ou d'une matière de nature très diverses, comme, par exemple, dans des machines à laver dans lesquelles il y a lieu d'introduire un détergent, la distribution automatique d'aliments conditionnés, etc.

Plus particulièrement, dans le cas de débits de boissons équipés d'une installation de distribution de boissons en fûts, généralement le fabricant ou le fournisseur de la boisson fait l'investissement de l'installation de distribution en échange d'une exclusivité sur la livraison de la boisson. Toutefois, la convention ainsi conclue entre le fournisseur de boisson et l'exploitant du débit de boissons n'est pas toujours respectée par ce dernier, de sorte que dans ce cas l'investissement réalisé par le fournisseur diminue au profit d'autres fournisseurs qui n'ont pas eu à supporter le coût de l'installation.

Par ailleurs, actuellement, il n'est pas possible de contrôler efficacement l'entretien de l'installation du point de vue du nettoyage des circuits de cette dernière, le respect des dates de péremption des boissons distribuées, etc.

Par exemple dans le cas de la distribution de boissons, la présente invention permet un contrôle efficace de la qualité des boissons par le suivi de leur provenance, l'identification des dates de péremption ainsi que la vérification du nettoyage des tuyaux de l'installation de distribution, pouvant aller jusqu'au blocage de ceux-ci si les conditions d'hygiène ne sont pas respectées.

A cet effet, le procédé de contrôle suivant l'invention consiste à prévoir, d'une manière inviolable, sur le produit en cause ou sur l'emballage de celui-ci et/ou sur l'installation mettant en oeuvre ce produit, des moyens d'identification et/ou de contrôle de qualité, tels qu'une clef électronique, contenant diverses informations et à soumettre ces moyens à une détection d'au moins certaines de ces informations, les informations ainsi détectées étant alors comparées avec des données de référence, stockées éventuellement dans un appareil de contrôle et, lorsque les informations détectées sont en concordance avec les données de référence, le produit et/ou l'installation susdits sont mis en service, dans le cas contraire cette mise en service étant bloquée.

Avantageusement, l'on fait usage de moyens d'identification qui, moyennant un code spécial, peuvent être complétés et/ou modifiés par des données détectables introduites par le fabricant, par le distributeur et/ou par l'utilisateur dudit produit et éventuellement par tout intermédiaire dans la chaîne de manipulation entre la fabrication et l'utilisation ou la distribution du produit concerné.

Suivant une forme de réalisation particulière de l'invention, dans le cas de débits de boissons disposant d'une installation de distribution de boissons conditionnées dans des conteneurs, on prévoit sur chacun de ces conteneurs une clef électronique d'identification contenant des informations concernant le fabricant, le distributeur, le type de boisson, le volume de la boisson contenu dans le conteneur et/ou les informations de suivi, telles que dates de fabrication, de mise en conditionnement et de péremption, ces informations étant détectées et comparées avec des données stockées dans un appareil de contrôle et lorsque ces informations détectées sont en concordance avec les données stockées, l'installation de distribution est mise en service. Dans le cas contraire, cette mise en service est bloquée.

L'invention concerne également un dispositif de contrôle pour la mise en oeuvre du procédé précité, notamment pour la distribution de produits déterminés, tels que boissons, carburant pour automobile, etc.

Ce dispositif est caractérisé par le fait qu'il comprend, d'une part, des moyens d'identification de ces produits et, d'autre part, des moyens de détection de données contenues dans ces moyens d'identification, ces derniers coopérant avec des organes permettant la distribution ou l'utilisation desdits produits lorsque ces données sont en concordance avec les données stockées dans les moyens de détection.

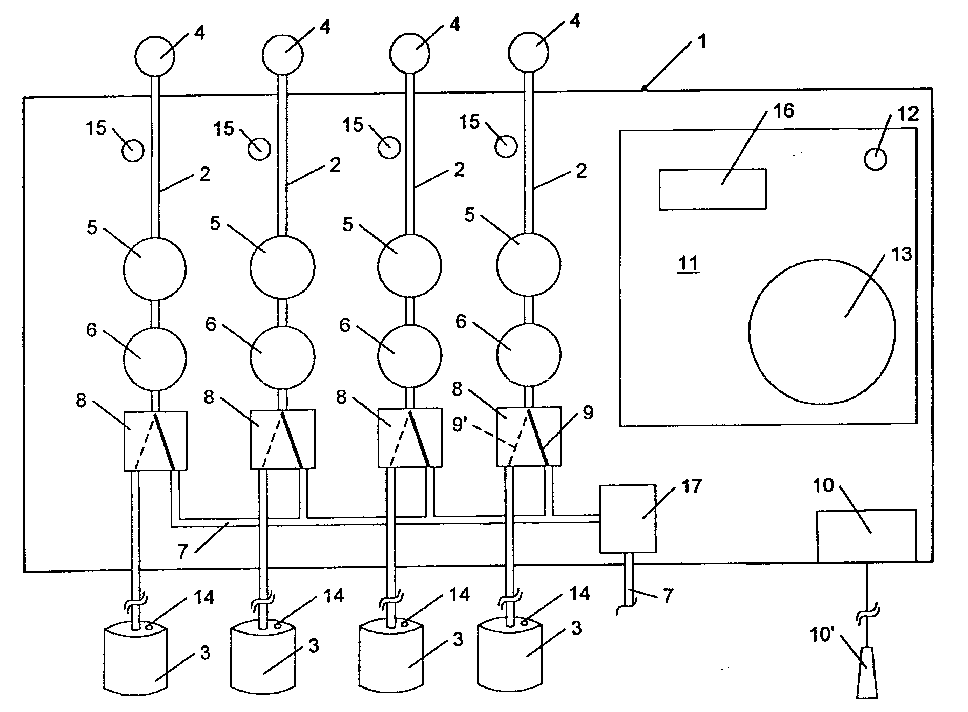

D'autres détails et particularités de l'invention ressortiront de la description donnée ci-après, à titre d'exemple non limitatif, d'une forme de réalisation particulière de l'invention avec référence à la figure annexée.

Cette figure représente très schématiquement une forme de réalisation particulière d'un dispositif de contrôle, suivant l'invention, qui est placé sur les tuyaux d'une installation de distribution de boissons conditionnées dans des conteneurs. Dans cette figure, les chiffres de référence se rapportent à la description donnée ci-après.

D'une façon générale, l'invention est relative à un procédé pour le contrôle (a) de la manutention, telle que la distribution et l'utilisation d'un produit qui peut être de nature très variée et se présenter aussi bien à l'état solide, liquide ou gazeux, en vrac ou à l'état empaqueté, (b) de la qualité de ce produit et/ou (c) des conditions de travail d'une installation mettant en oeuvre ce produit.

Ce procédé se caractérise par le fait que l'on prévoit, d'une manière inviolable, sur le produit susdit ou sur l'emballage de celui-ci et/ou sur l'installation mettant en oeuvre ce produit des moyens d'identification et/ou de contrôle de qualité, notamment une clef électronique, contenant diverses informations, et que l'on soumet ces moyens à une détection d'au moins certaines de ces informations ou données stockées dans ces derniers, ces données ou informations ainsi détectées étant alors comparées à des données de référence qui peuvent éventuellement être stockées dans un appareil de contrôle et, lorsque les données détectées sont en concordance avec les données stockées, le produit et/ou l'installation susdits sont mis en service, tandis que, dans le cas contraire, cette mise en service est bloquée.

Afin de permettre d'illustrer d'une manière concrète l'objet de la présente invention, ci-après est donné un exemple de réalisation du procédé suivant l'invention appliqué sur une installation de distribution de bière contenue dans des fûts.

La figure schématique annexée se rapporte à cet exemple précis.

Dans cette forme de réalisation, le dispositif de contrôle suivant l'invention comprend un boîtier de contrôle 1, qui est placé en série sur les tuyaux d'amenée de la bière 2 d'une installation classique de distribution de bière. Une des extrémités de chacun de ces tuyaux 2 est raccordée de manière amovible à un fût 3 contenant un type bien déterminé de bière, l'autre extrémité aboutissant à une pompe à bière 4 placée sur le comptoir d'un local de consommation.

Ce boîtier 1 contient, pour chacun des tuyaux 2, une électrovanne 5, qui permet de bloquer ou d'ouvrir le passage de la bière à partir d'un fût déterminé vers la pompe à bière 4 correspondante ainsi qu'un débitmètre 6 permettant de déterminer le volume de bière délivré par la pompe considérée.

Par ailleurs, le boîtier de contrôle 1 contient de préférence également les parties mécaniques et électriques nécessaires au contrôle du nettoyage des tuyaux 2.

Ainsi, une conduite d'arrivée d'eau 7 est branchée sur chacun des tuyaux 2 par l'intermédiaire d'électrovannes à deux voies 8. Ces vannes 8 permettent de brancher, lors du nettoyage des tuyaux 2, la conduite d'amenée d'eau 7 sur ces tuyaux et de couper en même temps l'arrivée de la bière. La figure montre schématiquement, en traits pleins, le raccordement 9 de la conduite d'amenée d'eau 7 aux tuyaux d'amenée de la bière 2 pendant que le raccordement 9', montré en traits interrompus, au fût 3 a été interrompu. Les vannes 8 sont donc dans la position de nettoyage. Dans l'autre position, l'arrivée d'eau est coupée par les vannes 8 et la pompe à bière 4 est raccordée par le tuyau 2 au fût correspondant 3. Une vanne de sécurité 17 est avantageusement également prévue sur la conduite d'amenée 7 de l'eau de nettoyage.

Le boîtier de contrôle 1 comprend, en plus, toute la partie électronique pour le contrôle et la commande de la position des vannes 5 et 8 ainsi que pour l'enregistrement du volume de bière passant par le débitmètre 6, en même temps qu'un lecteur de clef électronique 10, un écran LCD 11, un lecteur infrarouge 12, un ronfleur 13 et un bouton 16 de mise en service du boîtier de contrôle.

Etant donné que cette partie électronique peut être constituée d'éléments connus en soi, il n'a pas été jugé utile de les décrire plus en détail.

Une clef électronique d'identification 14, comprenant par exemple une pastille "Touch 10" de la firme "Dallas", et contenant diverses informations encriptées,est scellée sur chaque fût 3. Cette clef 14 contient des informations concernant le brasseur, le fournisseur, le type de bière et le volume de bière contenu dans le fût. Cette clef contient également des informations de suivi, telles que les dates de fabrication, de mise en fût et de péremption, de même que des numéros de lot par lesquels les références des fournisseurs et distributeurs par lesquels le fût est passé successivement et les références des établissement dans lesquels le fût a été mise en perce, la date à laquelle ceci a eu lieu, etc.

Lorsqu'un fût est mis en perce, les informations contenues dans la clef 14 sont automatiquement lues par le lecteur de clef 10 prévu sur le boîtier de contrôle, au moyen d'une sonde 10', que l'on place sur la clef 14 du fût mis en perce. Ces informations sont alors comparées aux données stockées dans les parties électroniques du boîtier de contrôle 1 et si ces informations sont en concordance avec ces données stockées, les unités de volume contenues dans la clef 14 sont effacées et mémorisées dans la partie électronique du boîtier de contrôle 1. La distribution du contenu du fût concerné est alors autorisée pour le volume indiqué dans la clef, volume qui avait été programmé conjointement à d'autres informations de contrôle de qualité, etc., indiqués ci-dessus au moment du remplissage du fût en cause.

Lorsque le volume autorisé a été distribué, l'électrovanne correspondante 5 se ferme et l'installation est bloquée jusqu'à la mise en perce d'un nouveau fût et le transfert d'informations de la clef 14, prévue sur ce nouveau fût, vers la partie électronique précitée du boîtier de contrôle 1 par l'intermédiaire du lecteur de clef électronique 10, comme indiqué ci-dessus.

Il est possible de déconnecter temporairement un fût d'un tuyau d'amenée 2. Dans ce cas, les unités de volume restant à distribuer sont réintroduites dans la clef électronique 14 de ce fût afin de pouvoir être réutilisées ultérieurement.

Chaque fois qu'un fût est connecté à un tuyau d'amenée 2 vers la pompe à bière 4 ou est déconnecté de ce tuyau, les informations d'identification de ce fût sont mémorisées dans une mémoire prévue dans la partie électronique du boîtier de contrôle 1. Ces informations peuvent être lues à l'aide d'un terminal de lecture, non représenté, et permettent ainsi un contrôle supplémentaire et un suivi éventuel des fûts.

Toujours grâce à la partie électronique du dispositif de contrôle suivant l'invention, il est possible de gérer le nettoyage des tuyaux 2 de l'installation de distribution par exemple par une vérification de la fréquence de nettoyage et du volume d'eau envoyé dans les tuyau.

Suivant l'invention, il est également possible d'intégrer un système de remplissage automatique d'eau dans les conduites pendant les périodes d'inactivité de l'installation de distribution.

Un capteur, non représenté sur la figure, peut être inséré sur la ligne de distribution pour permettre de distinguer l'eau de nettoyage de la boisson normalement distribuée par l'installation. Le fonctionnement de ce capteur peut par exemple être basé sur un principe optique ou de conductivité électrique.

Par ailleurs, une lampe témoin 15 peut être agencée auprès de chaque pompe à bière 4 de manière à visualiser la mise en service de cette pompe.

Enfin, des moyens de sécurité, également connus en soi, peuvent être prévus pour éviter tout piratage, fraude ou infraction au procédé de contrôle, suivant l'invention, quelque peu de la même façon que dans une installation de surveillance et d'alarme conventionnelle. Ainsi, le boîtier peut être fermé par une clef et un système de contrôle pourrait être prévu qui enregistre la date et l'heure d'ouverture de ce boîtier, même si le boîtier est hors service.

Il est bien entendu que l'invention n'est pas limitée à la forme de réalisation particulière décrite ci-avant et représentée à la figure annexée, mais que bien des variantes peuvent être envisagées sans sortir du cadre de la présente invention.

Ainsi, un tel dispositif de contrôle pourrait, par exemple, être prévu sur des véhicules automobiles pour contrôler la nature du carburant utilisé pour le cas où un contrat a été conclu entre le propriétaire du véhicule et le fournisseur du carburant, qui prendrait par exemple en charge certains frais relatifs au véhicule considéré.

Dans une autre application, un tel dispositif de contrôle pourrait être prévu sur un distributeur automatique de produits alimentaires, par exemple de gaufres, pour s'assurer de l'origine des gaufres introduites dans le distributeur.

Il peut également s'agir de produits solides en vrac destinés à être stockés dans des silos, par exemple de la farine chez un boulanger, des aliments pour bétail, des engrais, des granules de matières plastiques, des matières premières pour la fabrication d'un produit déterminé, etc., pour lesquels le fournisseur a fait l'investissement des silos.

Dans une autre application encore, un tel dispositif de contrôle pourrait être prévu sur une machine à laver pour s'assurer qu'une poudre à laver d'une origine déterminée soit toujours utilisée, ou sur une machine à café.

Enfin, dans certains cas, le procédé suivant l'invention peut être limité uniquement au contrôle de la manipulation d'un produit déterminé, au contrôle de la qualité d'un produit détermine ou au contrôle des conditions de fonctionnement d'une installation mettant en oeuvre un produit déterminé, ou encore à la combinaison de deux ou trois de ces types de contrôle.

## Revendications

1. Procédé de contrôle de la manutention, telle que la distribution et l'utilisation, d'un produit déterminé (3), de la qualité de ce produit et/ou des conditions de travail d'une installation mettant en oeuvre ce produit, caractérisé en ce que l'on prévoit, d'une manière inviolable, sur le produit susdit ou sur l'emballage de celui-ci et/ou sur l'installation mettant en oeuvre ce produit, des moyens d'identification et/ou de contrôle de qualité (14), telle qu'une clef électronique contenant diverses informations encryptées et en ce que l'on soumet ces moyens à une détection d'au moins certaines des données stockées dans ces derniers, ces données détectées étant alors comparées avec des données de référence stockées éventuellement dans un appareil de contrôle et, lorsque les données détectées sont en concordance avec les données stockées, le produit et/ou l'installation susdits sont mis en service, dans le cas contraire cette mise en service est bloquée.

2. Procédé suivant la revendication 1, caractérisé en ce que l'on fait usage de moyens d'identification (10) qui, moyennant un code spécial, peuvent être complétées et/ou modifiées par des données détectables introduites par le fabricant, par le distributeur et/ou par l'utilisateur dudit produit et, éventuellement, par tout intermédiaire dans la chaîne de manipulation entre le fabricant et l'utilisateur ou distributeur.

3. Procédé suivant l'une ou l'autre des revendications 1 et 2, caractérisé en ce que l'on fait usage de moyens de détection comprenant des données pouvant être stockées dans l'installation pour la mise en oeuvre du produit précité.

4. Procédé suivant l'une quelconque des revendications 1 à 3, caractérisé en ce que, appliqué dans des débits de boissons équipés d'une installation de distribution de boissons conditionnées dans des conteneurs, on prévoit sur chacun de ces conteneurs une clef électronique d'identification contenant des information concernant le fabricant, le distributeur, le type de boisson, le volume de la boisson contenu dans le conteneur et/ou des informations de suivi, telles que date de fabrication, de mise en conditionnement et de péremption.

5. Dispositif de contrôle pour la mise en oeuvre du procédé suivant l'une quelconque des revendications 1 à 4, notamment pour la distribution de produits déterminés, tels que boissons, carburant pour automobiles, etc., caractérisé en ce qu'il comprend, d'une part, des moyens d'identification (14) de ces produits (3) et, d'autre part, des moyens de détection (10) de données contenues dans ces moyens d'identification (14), ces derniers coopérant avec des organes (5, 6, 8) permettant la distribution ou l'utilisation desdits produits lorsque ces données sont en concordance avec des données stockées dans les moyens de détection (14).
